# EUROPÄISCHE PATENTANMELDUNG

(11) **EP 4 650 124 A1**
(43) Veröffentlichungstag der Anmeldung: **19.11.2025**
(21) Anmeldenummer: 25176967.5
(22) Anmeldetag: 16.05.2025
(51) Int. Cl.: B25J 15/06

(54) **DRUCKLUFTBETRIEBENE UNTERDRUCKERZEUGUNGSVORRICHTUNG UND FLÄCHENSAUGGREIFER**

(30) Priorität: 16.05.2024 DE 102024113692
(71) Anmelder: J. Schmalz GmbH, 72293 Glatten (DE)
(72) Erfinder: Lorenz, Thomas, 76547 Sinzheim (DE); Schneider, Fabian, 72285 Pfalzgrafenweiler (DE); Jungkurth, Anne, 72290 Loßburg (DE)
(74) Vertreter: DREISS Patentanwälte PartG mbB

(57) **Zusammenfassung**

Die Erfindung betrifft eine druckluftbetriebene Unterdruckerzeugungsvorrichtung (1), insbesondere zum Einschieben in ein Gehäuse (17) eines Flächensauggreifers (18), umfassend eine Mehrzahl von Düsensträngen (3, 5, 7) mit jeweils zumindest einer Ejektordüse (9, 11, 13) zur Erzeugung von Unterdruck aus Druckluft, wenigstens einen Druckluftanschluss (21) zum Anschluss an eine Druckluftversorgung, eine Ventilvorrichtung (19), welche dazu ausgebildet ist, eine jeweilige Strömungsverbindung zwischen den Düsensträngen (3, 5, 7) und dem wenigstens einen Druckluftanschluss (21) einzeln freizugeben und/oder abzusperren.

## Beschreibung

Die Erfindung betrifft eine druckluftbetriebene Unterdruckerzeugungsvorrichtung und einen Flächensauggreifer.

Derartige Unterdruckerzeugungsvorrichtungen und Flächensauggreifer zum Greifen von Gegenständen sind bekannt. Damit können die Gegenstände angesaugt und im angesaugten Zustand gehalten und verlagert werden, um sie beispielsweise für einen nachfolgenden Prozessschritt bereitzustellen. Dabei ist beispielsweise beim Ansaugen des Gegenstands oftmals eine höhere Saugleistung der Unterdruckerzeugungsvorrichtung erforderlich als beim Halten des Gegenstands im angesaugten Zustand. Bekannte Unterdruckerzeugungsvorrichtungen, die einen konstanten Unterdruck und somit eine konstante Saugleistung erzeugen, sind daher hinsichtlich des Druckluftvorrats und der Energienutzung ineffizient.

Eine Möglichkeit, Energie einzusparen, ist es die Unterdruckerzeugungsvorrichtung temporär ein- und auszuschalten. Dies ist aber üblicherweise mit hohen Druckunterschieden verbunden und nicht für alle Materialen und Druckbereiche geeignet, da hierbei die Sogwirkung oft sehr schnell abfällt beziehungsweise ansteigt. Zudem entstehen durch das Ein- und Ausschalten relativ hohe und plötzliche Druckdifferenzen, wodurch der gehaltene Gegenstand unter Umständen stark strapaziert wird.

Insbesondere bei luftdurchlässigen, porösen Gegenständen kann diese Methode problematisch sein, da die Haltekraft beim Ausschalten der Unterdruckerzeugungsvorrichtungen zu schnell nachlässt, was die Zuverlässigkeit beeinträchtigen könnte, z.B. zu einem unbeabsichtigten Herabfallen des Gegenstands führen könnte.

Der Erfindung liegt die Aufgabe zugrunde, beim Ansaugen und Halten von Gegenständen möglichst ohne Beeinträchtigung der Zuverlässigkeit Energie und Druckluft einzusparen.

Diese Aufgabe wird erfindungsgemäß durch eine druckluftbetriebene Unterdruckerzeugungsvorrichtung mit den Merkmalen des Anspruchs 1 gelöst. Die druckluftbetriebene Unterdruckerzeugungsvorrichtung ist insbesondere dazu ausgebildet, um in ein Gehäuse eines Flächensauggreifers eingeschoben zu werden. Dabei weist die Unterdruckerzeugungsvorrichtung eine Mehrzahl von Düsensträngen mit jeweils zumindest einer Ejektordüse zur Erzeugung von Unterdruck aus Druckluft auf. Ferner weist die Unterdruckerzeugungsvorrichtung wenigstens einen Druckluftanschluss zum Anschluss an eine insbesondere externe Druckluftversorgung sowie eine Ventilvorrichtung auf, welche dazu ausgebildet und vorzugsweise eingerichtet ist, eine Strömungsverbindung zwischen den jeweiligen Düsensträngen, insbesondere den jeweiligen Ejektordüsen, und dem wenigstens einen Druckluftanschluss freizugeben oder abzusperren. Insbesondere ist die Ausgestaltung derart, dass die Strömungsverbindung vorzugsweise selektiv zu einzelnen/individuellen Ejektordüsen, insbesondere steuerungstechnisch voneinander unabhängig, erfolgen kann. Dadurch können einzelne Druckluftstränge ausgeschaltet werden, um Energie und/oder aus einem Druckluftreservoir kommende Druckluft zu sparen, wobei weiterhin Unterdruck durch eine der anderen Druckluftstränge erzeugt werden kann, sodass insgesamt ein ausreichender Unterdruck erzeugt wird, um insbesondere einen luftdurchlässigen beziehungsweise porösen Gegenstand zu halten.

Unter der Strömungsverbindung wird hier insbesondere eine Strömungsverbindung zwischen dem Druckluftanschluss einerseits und zumindest einem der Düsenstränge, insbesondere zumindest einer der in dem jeweiligen Düsenstrang angeordneten Ejektordüsen, andererseits verstanden. Dabei sind insbesondere zumindest zwei solcher jeweiligen Strömungsverbindungen vorgesehen, die vorzugsweise zumindest abschnittsweise strömungstechnisch parallel zueinander geschaltet sind und zu entsprechend mehreren jeweiligen Düsensträngen und den darin angeordneten Ejektordüsen führen.

Die Düsensträngen sind zumindest bis zu einem gewissen Grad voneinander unabhängig betreibbar. Dabei wird unter einem unabhängigen Betreiben und dem einzelnen/individuellen Freigeben und Sperren hier insbesondere verstanden, dass die Düsenstränge in Bezug auf Absperren und Freigabe und insbesondere die diesbezüglichen technischen Schaltungsmittel, insbesondere in Bezug auf die Ansteuerung von Ventilen unabhängig abgesperrt und freigegeben werden können. Dabei ist die Unterdruckerzeugungsvorrichtung also zumindest baulich ausgebildet, um einen einzelnen Düsenstrang zu schließen und freizugeben, ohne dabei alle anderen, und vorzugsweise ohne einen anderen Düsenstrang schließen zu müssen. Es kann dabei durchaus vorgesehen und die Ventilvorrichtung insbesondere über ein Steuergerät entsprechend eingerichtet sein, dass eine logische Abhängigkeit derart besteht, dass beim Freigeben und Sperren eines Düsenstrangs zunächst der Zustand eines anderen Düsenstrangs geprüft wird. Dies widerspricht nicht dem hier angesprochen unabhängigen oder einzelnen Freigeben und Sperren eines Düsenstrangs.

Ferner ist es möglich, dass mehrere Düsenstränge gemeinsam freigegeben und gesperrt werden, sofern es zumindest einen Düsenstrang gibt, der nicht zusammen mit den übrigen Düsensträngen freigegeben und gesperrt wird. Alternativ können alle vorhandenen Düsenstränge unabhängig voneinander freigegeben und gesperrt werden.

Die Durchströmbarkeit der Düsenstränge ist also individuell aktivierbar und deaktivierbar. Die Düsenstränge können individuell freigegeben und gesperrt werden, wobei die Unterdruckerzeugungseinrichtung bevorzugt auch strukturell dazu eingerichtet ist, um die Düsenstränge insgesamt unabhängig, insbesondere logisch unabhängig, voneinander zu sperren und freizugeben.

Vorzugsweise sind die Düsenstränge über den wenigstens einen Druckluftanschluss mit Druckluft versorgbar, indem die Druckluft einer insbesondere externen Druckluftversorgung über die Strömungsverbindung zum Düsenstrang und der Ejektordüse strömen kann.

Unter einem Düsenstrang wird hier insbesondere ein Strömungsabschnitt verstanden, welcher wenigstens eine Ejektordüse umfasst und ausgebildet und eingerichtet ist, um Unterdruck aus Überdruck, also aus Druckluft erzeugen zu können. Der Düsenstrang erstreckt sich von einem Düsenstrangeingang bis zu einem Düsenstrangauslass, wobei der Düsenstrangeingang vorzugsweise einem Eingang der ersten, insbesondere in Strömungsrichtung vorderen Ejektordüse und der Düsenstrangauslass einem Ausgang der ersten Ejektordüse oder - insbesondere für den Fall, dass der Düsenstrang mehrere Ejektordüsen aufweist - einem Ausgang einer nachgeschalteten, weiteren, insbesondere zweiten oder dritten, Ejektordüse entspricht. Die weitere Ejektordüse ist dabei in Strömungsrichtung hinter der ersten Ejektordüse in demselben Düsenstrang angeordnet. Beim Durchströmen des Düsenstrangs wird somit zuerst die erste Ejektordüse und anschließend die weitere, insbesondere zweite oder dritte, Ejektordüse durchströmt.

Vorzugsweise sind zumindest zwei, bevorzugt drei Düsenstränge vorgesehen, wobei jeder der zumindest zwei, bevorzugt drei Düsenstränge wenigstens eine eigene Ejektordüse umfasst.

Um die Druckluft von dem Druckluftanschluss zu den Düsensträngen zu führen sind vorzugsweise zuführende Strömungsabschnitte vorgesehen, welche sich von dem Druckluftanschluss bis zu den Düsensträngen erstrecken. Bevorzugt umfassen die zuführenden Strömungsabschnitte dabei ausgehend von dem Druckluftanschluss einen gemeinsamen Strömungsabschnitt für alle Düsenstränge und daran anschließend mehrere Strömungszweige, welche sich vorzugsweise von dem gemeinsamen Strömungsabschnitt abzweigen, um die Druckluft - bei freigegebener Strömungsverbindung - den mehreren, einzelnen Düsensträngen und Ejektordüsen zuzuführen.

Alternativ bevorzugt sind mehrere Druckluftanschlüsse vorgesehen, wobei sich die Strömungszweige jeweils von den Düsensträngen bis zu jeweils einem der Druckluftanschlüsse erstrecken.

Vorzugsweise weist die Unterdruckerzeugungsvorrichtung für zumindest zwei, vorzugsweise alle Düsenstränge einen gemeinsamen Druckluftanschluss auf. Alternativ bevorzugt weist die Unterdruckerzeugungsvorrichtung jeweils einen eigenen Druckluftanschluss für jeden der Düsenstränge auf.

Die Strömungsverbindung gilt insbesondere dann als freigegeben, wenn diese für die über den Druckluftanschluss zugeführte Druckluft durchströmbar, insbesondere derart durchströmbar ist, dass ein zum Ansaugen und/oder Halten von Gegenständen geeigneter Unterdruck von der Ejektordüse erzeugt wird. Entsprechend gilt sie als abgesperrt, wenn die Strömungsverbindung nicht durchströmbar ist oder zumindest nicht in einem zum Halten und/oder Ansaugen erforderlichen Maße durchströmbar ist. Das bedeutet beispielsweise, dass die Strömungsverbindung durch ein strömungstechnisch nachgeschaltetes Ventil ebenfalls freigegeben und gesperrt werden kann.

Bevorzugt ist ein Ventil der Ventilvorrichtung strömungstechnisch zwischen dem Düsenstrang, insbesondere der ersten Ejektordüse des Düsenstrangs, und Druckluftanschluss, insbesondere in dem zu der Ejektordüse führenden Strömungszweig oder strömungstechnisch hinter dem gemeinsamen Strömungsabschnitt, angeordnet.

Alternativ ist das Ventil strömungstechnisch hinter der dem Ventil zugeordneten Ejektordüse in demselben Strömungszweig wie die Ejektordüse angeordnet.

Unter einem Ventil wird hier insbesondere eine betätigbare Vorrichtung verstanden, welche ausgebildet und eingerichtet ist, um bei Betätigung eine Strömungsverbindung zu unterbrechen oder freizugeben. Vorzugsweise ist das Ventil dabei ausgebildet und eingerichtet, um genau einen Strömungszweig zu unterbrechen beziehungsweise freizugeben. Alternativ ist das Ventil ausgebildet und eingerichtet, um - insbesondere in verschiedenen Ventilstellungen - mehrere verschiedene Strömungszweige freizugeben und/oder zu sperren.

Die Ventilvorrichtung umfasst zumindest ein Ventil. Dabei ist die Ventilvorrichtung derart ausgebildet und eingerichtet, dass zumindest ein Düsenstrang mit dem Ventil absperrbar ist, während zumindest ein anderer Düsenstrang nicht absperrbar ist. Ein Durchströmen des nicht absperrbaren Düsenstrangs kann dabei gestoppt werden, indem eine Druckluftzufuhr gestoppt wird.

Insbesondere ist es möglich, dass mehrere Strömungszweige und die dahinter angeordneten Düsenstränge und die darin angeordneten Ejektordüsen mit demselben Ventil in einer Ventilstellung gemeinsam gesperrt und freigegeben werden. Ferner ist es möglich, dass mehrere Strömungszweige und die entsprechenden Düsenstränge und Ejektordüsen nicht freigebbar und absperrbar sind.

Vorzugsweise umfasst die Ventilvorrichtung mehrere Ventile und/oder ein Ventil, insbesondere ein Mehrwegeventil, wobei das Mehrwegeventil zum Freigeben und Absperren mehrerer Düsenstränge und Ejektordüsen eingerichtet ist, wobei zum Freigeben und Absperren einzelner Düsenstränge der mehreren Düsenstränge jeweils verschiedene Ventilstellungen vorgesehen sind.

Vorzugsweise weist jeder der Düsenstränge, insbesondere der erste, zweite und/oder dritte Düsenstrang, einen Strömungsquerschnitt auf, der in einem ersten Abstand zum Druckluftanschluss größer ist als in einem zweiten Abstand, wobei der erste Abstand kleiner ist als der zweite Abstand. Vorzugsweise wird also der Strömungsquerschnitt in dem Düsenstrang zumindest abschnittsweise mit zunehmendem Abstand zum Druckluftanschluss kleiner, wobei der Strömungsquerschnitt vorzugsweise am Strömungsausgang der Ejektordüse minimal ist.

Die Unterdruckerzeugungsvorrichtung kann ferner zum Ansaugen und Handhaben von Gegenständen ausgebildet und eingerichtet sein.

Gemäß einer bevorzugten Ausführungsform der Erfindung ist vorgesehen, dass die Ventilvorrichtung ausgebildet und eingerichtet ist, um einen ersten Düsenstrang der Mehrzahl von Düsensträngen mit einem ersten Schließelement zu sperren und freizugeben, und um einen zweiten und dritten Düsenstrang der Mehrzahl von Düsensträngen mit einem zweiten Schließelement zu sperren und freizugeben. Vorzugsweise wird hier als erstes und zweites Schließelement ein erstes und zweites Ventil verwendet. Dadurch können mit nur zwei Schließelementen mehrere Unterdruckerzeugungsstufen geschaffen werden, sodass die Unterdruckerzeugungsvorrichtung vergleichsweise einfach und kostengünstig hergestellt werden kann. Zudem ist es dadurch mit den mehreren Unterdruckstufen möglich, den Unterdruck flexibel an einen zu greifenden und zu haltenden Gegenstand anzupassen.

Der erste Düsenstrang, der zweite Düsenstrang und der dritte Düsenstrang sind dabei jeweils ausgehend von dem Druckluftanschluss vorzugsweise über einen ersten, zweiten und dritten Strömungszweig durchströmbar. Der erste, zweite und dritte Strömungszweig zweigen sich dabei von einem gemeinsamen Strömungsabschnitt ab, welcher sich zwischen den Strömungszweigen und dem Druckluftanschluss erstreckt.

Vorzugsweise wird dabei der zweite und dritte Düsenstrang mit derselben Betätigung des zweiten Schließelements insbesondere zeitgleich gesperrt und einer entsprechend weiteren Betätigung freigegeben. Hierzu ist vorzugsweise vorgesehen, dass strömungstechnisch zwischen dem gemeinsamen Strömungsabschnitt und/oder dem Druckluftanschluss einerseits und dem zweiten und dritten Düsenstrang andererseits ein gemeinsamer Strömungszweigabschnitt angeordnet ist, welcher den zweiten und dritten Düsenstrang, und insbesondere den zweiten und dritten Strömungszweig, mit dem Druckluftanschluss und insbesondere dem gemeinsamen Strömungsabschnitt verbindet.

Gemäß einer bevorzugten Ausführungsform der Erfindung ist vorgesehen, dass die Ventilvorrichtung zum Freigeben und Sperren der Strömungsverbindung zumindest einen Steuerkolben, insbesondere einen ersten Steuerkolben und einen zweiten Steuerkolben, aufweist. Der insbesondere erste Steuerkolben dient also als Schließelement beziehungsweise Ventil im Sinne dieser Beschreibung. Der Steuerkolben, insbesondere der erste Steuerkolben, ist vorzugsweise in einer Steuerkolbeneinrichtung angeordnet, und ausgebildet und eingerichtet, um zumindest einen der Düsenstränge, insbesondere den ersten Düsenstrang, strömungstechnisch zu blockieren, vorzugsweise dicht zu verschließen, und die Strömungsverbindung zur Ejektordüse dieses Düsenstrangs zu unterbrechen oder zumindest abzuschwächen. Dadurch sind die Strömungspfade einzeln verschließbar, sodass ein erzeugter Unterdruck der Unterdruckerzeugungsvorrichtung durch Verstellen des Steuerkolbens skalierbar ist.

Vorzugsweise wird der zumindest eine Düsenstrang, insbesondere der erste Düsenstrang, dabei eingangsseitig blockiert.

Die gesamte Steuerkolbeneinrichtung ist dabei bevorzugt als Steuerkolbenmodul ausgebildet, welches baulich separat zur übrigen Unterdruckerzeugungsvorrichtung ausgebildet ist. Das Steuerkolbenmodul kann dabei von anderen Modulen der Unterdruckerzeugungsvorrichtung vorzugsweise mit einem einfach betätigbaren Befestigungsmittel reversibel getrennt und somit nach dem Trennen wieder verbunden werden.

Unter einem Modul wird hier insbesondere auch verstanden, dass die entsprechende Einrichtung als bauliche Einheit, insbesondere mit eigenem Gehäuse, ausgebildet ist.

Insbesondere unterbrechen die Steuerkolben eine Strömungsverbindung zwischen zumindest einem der Düsenstränge und Druckluftanschluss.

Vorzugsweise dringt der Steuerkolben in den Düsenstrang und/oder den zu dem Düsenstrang führenden Strömungszweig ein, um die strömungstechnische Verbindung zur Ejektordüse dieses Düsenstrangs zu unterbrechen. Dadurch ist eine dichte und zuverlässige Absperrung des Düsenstrangs gewährleistet.

Vorzugsweise ist die Ventilvorrichtung ausgebildet und eingerichtet, um mit dem zweiten Steuerkolben zwei Düsenstränge, insbesondere den zweiten und dritten Düsenstrang, auf einmal zu blockieren, insbesondere indem der gemeinsame Strömungszweigabschnitt, welcher strömungstechnisch zwischen Druckluftanschluss und den Düsensträngen angeordnet ist, blockiert wird.

Gemäß einer bevorzugten Ausführungsform der Erfindung ist vorgesehen, dass die Unterdruckerzeugungsvorrichtung zum Freigeben und Sperren der Strömungsverbindungen eine Steuereinrichtung aufweist, welche ausgebildet und eingerichtet ist, um die Ventilvorrichtung, insbesondere deren Schließelemente, ganz besonders die Steuerkolben, pneumatisch und/oder elektrisch insbesondere einzeln und/oder vollständig unabhängig voneinander zu betätigen. Dadurch wird das Betätigen der Ventilvorrichtung vereinfacht und insbesondere eine elektrische und/oder pneumatische Steuerung der Ventilvorrichtung möglich.

Die Steuereinrichtung umfasst zur Betätigung der Ventilvorrichtung vorzugsweise eine Steuerelektronik, welche über eine Steuerungsschnittstelle ansteuerbar ist und/oder einer intern hinterlegten beziehungsweise konstruktiv eingerichteten Logik folgt, um die Ventilvorrichtung zu betätigen und die Strömungsverbindung zwischen Druckluftanschluss und Düsenstrang beziehungsweise Ejektordüse freizugeben und zu sperren.

Vorzugsweise ist die Steuereinrichtung derart autark ausgebildet, dass sie nicht auf externe Steuersignale angewiesen ist, um die Strömungsverbindung freizugeben und zu sperren. Besonders bevorzugt ist keine steuerungstechnische Verbindung von der Steuereinrichtung nach extern vorgesehen, wobei die gesamte erforderliche Steuerlogik zum Betätigen der Ventilvorrichtung in der Unterdruckerzeugungsvorrichtung selbst eingerichtet ist. Dies vereinfacht die Installation der Unterdruckerzeugungsvorrichtung und sie ist vielseitig einsetzbar, da die Anforderungen an externe Versorgungsinfrastruktur reduziert sind.

Die Steuereinrichtung ist ferner bevorzugt vollständig autark ausgebildet und eingerichtet, wobei die Steuereinrichtung vorzugsweise zum vollständig pneumatischen Betrieb ausgebildet und eingerichtet ist, und/oder wobei keine elektrische Versorgung von extern vorgesehen, insbesondere keine entsprechende elektrische und/oder steuerungstechnische Anschlusseinrichtung ausgebildet ist.

Die Steuereinrichtung ist vorzugsweise als separates Steuermodul ausgebildet welches baulich separat zur übrigen Unterdruckerzeugungsvorrichtung ausgebildet und mit dieser insbesondere reversibel verbindbar ist. Das Steuermodul kann dabei von anderen Modulen der Unterdruckerzeugungsvorrichtung vorzugsweise mit einem einfach betätigbaren Befestigungsmittel reversibel getrennt und somit nach dem Trennen wieder verbunden werden.

Alternativ kann die Steuereinrichtung in die Ventilvorrichtung, einem Steuerventilmodul und/oder das Steuerkolbenmodul oder ein anderes Modul integriert sein.

Gemäß einer bevorzugten Ausführungsform der Erfindung ist eine Steuerventileinrichtung vorgesehen, welche zum Verstellen der Steuerkolben ausgebildet und eingerichtet ist und hierzu vorzugsweise zumindest ein elektrisch und/oder pneumatisch betätigbares Steuerventil aufweist. Dabei ist die Steuereinrichtung ferner bevorzugt dazu ausgebildet und eingerichtet, das Steuerventil elektrisch und/oder pneumatisch zu betätigen. Dabei sind die Steuerventile einerseits und die Steuerkolben andererseits vorzugsweise in voneinander trennbaren Modulen, insbesondere dem Steuerventilmodul einerseits und dem Steuerkolbenmodul andererseits, angeordnet. Dadurch können die Steuerkolben insbesondere automatisiert angesteuert werden und - durch die Anordnung in den voneinander trennbaren Modulen - können einzelne Elemente bei einer Wartung oder Reparatur einzeln ausgewechselt werden.

Vorzugsweise ist es vorgesehen, dass ein erster Steuerkolben mit einem ersten Steuerventil betätigbar ist, und ein zweiter Steuerkolben und ein dritter Steuerkolben gemeinsam mit einem zweiten Steuerventil betätigbar sind.

Alternativ ist vorgesehen, dass jedem Steuerkolben ein eigenes Steuerventil zugeordnet ist, wobei durch dessen Betätigung der jeweilig zugeordnete Steuerkolben verstellbar ist.

Die Ventilvorrichtung umfasst vorzugsweise die Steuerventileinrichtung, die Steuereinrichtung und/oder die Steuerkolbeneinrichtung, um die Strömungsverbindung freizugeben und zu sperren. Alternativ oder zusätzlich kann die Ventilvorrichtung weitere Ventile aufweisen, mit welchen die Strömungsverbindung freigegeben und gesperrt werden kann. Insbesondere können diese weiteren Ventile in dem gemeinsamen Strömungsabschnitt und/oder einem oder mehreren der Strömungszweige angeordnet sein.

Ferner wird die Ventilvorrichtung vorzugsweise von der Steuereinrichtung gesteuert, um die Strömungsverbindung zwischen Druckluftanschluss und Düsenstrang beziehungsweise Ejektordüse insbesondere dann zu sperren, wenn ein aktueller Unterdruck in einem Saugvolumen eines Saugkörpers unterhalb eines ersten Schwellwerts liegt, und insbesondere dann freizugeben, wenn der erzeugte Unterdruck in dem Saugvolumen oberhalb eines zweiten Schwellwerts liegt. Das Saugvolumen ist dabei mit der Ejektordüse, insbesondere dessen Unterdruckseite, und/oder einem Saugkanal zur Ejektordüse strömungstechnisch verbunden, sodass im Betrieb der Unterdruckerzeugungsvorrichtung und bei freigegebener Strömungsverbindung in dem Saugvolumen von der Ejektordüse ein Unterdruck erzeugt wird, um den Gegenstand anzusagen und zu halten.

Unter einem hohen Unterdruck - auch starker Unterdruck genannt - wird hier insbesondere ein nominell niedriger Druckwert verstanden. Unter einem niedrigen Unterdruck - auch schwacher Unterdruck genannt - wird ein entsprechend nominell höherer Druckwert verstanden. Bei einem hohen Unterdruck besteht also eine höhere Druckdifferenz zu Umgebungsdruck, insbesondere Atmosphärendruck, als bei einem niedrigen Unterdruck. Somit handelt es sich um einen höheren, also stärkeren Unterdruck, wenn der erzeugte Unterdruck unterhalb des ersten beziehungsweise zweiten Schwellwerts liegt und entsprechend um einen niedrigeren, also schwächeren Unterdruck, wenn der erzeugte Unterdruck oberhalb des ersten beziehungsweise zweiten Schwellwerts liegt.

Dabei ist es möglich, dass der erste Schwellwert und der zweite Schwellwert nominell identisch sind.

Vorzugsweise unterscheidet sich aber der erste Schwellwert von dem zweiten Schwellwert, wobei der erste Schwellwert kleiner als der zweite Schwellwert ist, sodass der erste Schwellwert einem stärken Unterdruckwert als der zweite Schwellwert entspricht. Dadurch besteht zwischen dem ersten Schwellwert und dem zweiten Schwellwert ein Bereich, in welchem keine Steuerung zum Freigeben oder Sperren von Düsensträngen stattfindet.

Zum Messen des erzeugten Unterdrucks sind vorzugsweise Drucksensoren vorgesehen. Diese sind bevorzugt ausgebildet und eingerichtet, um einen Druck in dem Saugvolumen und/oder Saugkanal zu messen. Die Drucksensoren sind zur Signalübertragung mit der Steuereinrichtung insbesondere elektronisch verbindbar, insbesondere verbunden.

Bevorzugt ist die Unterdruckerzeugungseinrichtung ausgebildet und eingerichtet, um eine zunehmende Anzahl von Düsensträngen zu sperren, wenn der aktuell gemessene Unterdruck unterhalb des ersten Schwellwerts liegt. Es werden also solange weitere Düsenstränge gesperrt, bis der gemessene Unterdruck über den ersten Schwellwert ansteigt. Entsprechend werden - wenn der gemessene Unterdruck oberhalb des zweiten Schwellwerts liegt - vorzugsweise solange weitere Düsenstränge freigegeben, bis der gemessene Unterdruck unterhalb des zweiten Schwellwerts abgefallen ist.

Besonders bevorzugt ist die Unterdruckerzeugungseinrichtung ausgebildet und eingerichtet, um - wenn der gemessene Druck in dem Saugvolumen unter den ersten Schwellwert abgefallen ist - in einem ersten Sperr-Schritt den ersten Düsenstrang zu sperren, und vorzugsweise um - insbesondere wenn der gemessene Druck weiterhin unterhalb des ersten Schwellwerts ist - in einem zweiten Sperr-Schritt den zweiten und dritten Düsenstrang zu sperren und vorzugsweise den ersten Düsenstrang freizugeben, und ferner bevorzugt um - insbesondere wenn der gemessene Druck weiterhin unterhalb des ersten Schwellwerts ist - in einem dritten Sperr-Schritt den ersten, zweiten und dritten Düsenstrang zu sperren. Bevorzugt werden die Sperr-Schritte in dieser Reihenfolge durchlaufen. Alternativ kann aber auch der erste und/oder zweite Sperr-Schritt übersprungen werden, wobei anschließend mithilfe des zweiten Schwellwerts geprüft wird, ob übersteuert wurde und ggf. einzelne Düsenstränge wieder freigegeben werden müssen.

Ferner bevorzugt ist die Unterdruckerzeugungseinrichtung ausgebildet und eingerichtet, um - wenn der gemessene Druck in dem Saugvolumen oberhalb des zweiten Schwellwerts gemessen wird - in einem ersten Freigabe-Schritt den ersten Düsenstrang freizugeben, und vorzugsweise um - insbesondere wenn der gemessene Druck weiterhin oberhalb des zweiten Schwellwerts ist - in einem zweiten Freigabe-Schritt den zweiten und dritten Düsenstrang freizugeben und vorzugsweise den ersten Düsenstrang zu sperren, und ferner bevorzugt um - insbesondere wenn der gemessene Druck weiterhin oberhalb des zweiten Schwellwerts ist - in einem dritten Freigabe-Schritt den ersten, zweiten und dritten Düsenstrang freizugeben. Bevorzugt werden die Freigabe-Schritte in dieser Reihenfolge durchlaufen. Alternativ kann aber auch der erste und/oder zweite Freigabe-Schritt übersprungen werden, wobei anschließend mithilfe des ersten Schwellwerts geprüft wird, ob übersteuert wurde und gegebenenfalls einzelne Düsenstränge wieder gesperrt werden müssen.

Mithilfe der Sperr- und Freigabe-Schritte ist es möglich auf einfache Weise mit zwei Schließelementen, insbesondere dem ersten und zweiten Steuerkolben, eine mehrstufige Druckregelung mit insbesondere vier Druckstufen umzusetzen. Dadurch kann in einem besonders hohen Maße Energie und Druckluft eingespart werden.

Gemäß einer bevorzugten Ausführungsform der Erfindung ist vorgesehen, dass die Unterdruckerzeugungsvorrichtung, insbesondere die Ejektordüse, zumindest einen Saugkanal aufweist, der eine Kanalsaugöffnung mit dem Düsenstrang strömungstechnisch verbindet. Vorzugsweise sind dabei mehrere Saugkanäle vorgesehen, wobei jeder Ejektordüse ein eigener Saugkanal zugeordnet ist. Der Saugkanal mündet dabei in den Düsenstrang und bildet eine Unterdruckseite, sodass im Betrieb der Unterdruckerzeugungsvorrichtung bei freigegebenem Düsenstrang ein Fluid, insbesondere Luft, über den Saugkanal in den Düsenstrang gesaugt wird.

Dabei kann die Kanalsaugöffnung selbst ausgebildet und eingerichtet sein, um einen Gegenstand zu greifen. Ferner kann der Saugkanal das Saugvolumen aufweisen.

Vorzugsweise ist vorgesehen, dass die Kanalsaugöffnung mit zumindest einem insbesondere elastisch ausgebildeten Saugkörper mit einer Saugkammer, welche das Saugvolumen umgreift und eine Saugöffnung zum Greifen des Gegenstands aufweist, strömungstechnisch verbunden ist. Dabei ist vorgesehen, dass der insbesondere elastisch ausgebildete Saugkörper bei Greifen des Gegenstands mit diesem in Kontakt kommt. Der zumindest eine Saugkörper wird vorzugsweise von einem separat ausgebildeten Gehäuse und/oder einem an dem Gehäuse befestigbaren Adapterstück bereitgestellt.

Gemäß einer bevorzugten Ausführungsform der Erfindung ist vorgesehen, dass die Ejektordüsen, der Saugkanal und die Düsenstränge in einer insbesondere als Düsenmodul ausgebildeten Düseneinrichtung angeordnet sind. Dadurch kann das Düsenmodul einfach von der übrigen Unterdruckerzeugungseinrichtung getrennt werden, wodurch beispielsweise Wartungs- und Reparaturmaßnahmen vereinfacht sind.

Insbesondere ist es auch möglich, dass das Düsenmodul mehrere Untermodule aufweist, wobei beispielsweise in einem ersten Untermodul die Treibdüse und in einem zweiten Untermodul ein Diffusorabschnitt des Düsenstrangs angeordnet ist.

Insgesamt ist die Düseneinrichtung ausgebildet und eingerichtet, um Druckluft über einen Eingang des Düsenstrangs aufzunehmen, sodass die Druckluft die Treibdüse durchströmt, anschließend an dem Mündungsbereich mit dem Saugkanal vorbeiströmt und anschließend insbesondere über den Diffusorabschnitt zu dem Strömungsausgang strömt.

Gemäß einer bevorzugten Ausführungsform der Erfindung ist vorgesehen, dass die Unterdruckerzeugungsvorrichtung eine Schalldämpfereinrichtung aufweist, welche vorzugsweise als Schalldämpfermodul ausgebildet ist, wobei die Schalldämpfereinrichtung strömungstechnisch hinter den Düsensträngen angeordnet ist. Dadurch kann Druckluft aus den Düsensträngen insbesondere über den Diffusorabschnitt in die Schalldämpfereinrichtung strömen. Das Schalldämpfermodul kann dabei derart mehrstufig ausgebildet sein, dass dieses mehrere Untermodule umfasst. Dies führt zu einem reduzierten Betriebsgeräusch, wobei das Ausmaß der Geräuschreduktion durch die mehrstufige Gestaltung flexibel an einen Einsatzzweck und/oder Einsatzort der Unterdruckerzeugungsvorrichtung angepasst werden kann.

Unter einer Schalldämpfereinrichtung wird hier insbesondere eine Einrichtung verstanden, die ausgebildet und eingerichtet ist, um eine Geräuschreduzierung zu bewirken, wobei insbesondere die Geräuschentwicklung aufgrund der ausgestoßenen Strömungen beispielsweise durch Schaumstoff verringert wird.

Vorzugsweise mündet die den Düsenstrang durchströmende Strömung in der Schalldämpfereinrichtung.

Die Schalldämpfereinrichtung weist dabei auf ihrer Außenseite Strömungsöffnungen auf, über welche die die Unterdruckerzeugungsvorrichtung durchströmende Druckluft nach außen entweichen kann.

Gemäß einer bevorzugten Ausführungsform der Erfindung ist vorgesehen, dass die Unterdruckerzeugungsvorrichtung eine Schnittstelleneinrichtung, insbesondere ein endständig angeordnetes Eingangsmodul, aufweist, wobei der Druckluftanschluss und vorzugsweise zumindest ein Signalanschluss, insbesondere für ein elektrisches Signal, an dem Eingangsmodul angeordnet ist.

Zur Weiterleitung von Eingangssignal, welche über die Steuerungsschnittstelle von extern eingehen, und/oder zum Auslesen von Messwerten und/oder Diagnosedaten können ferner Signalleitungen vorgesehen sein, welche sich insbesondere ausgehend von der Schnittstelleneinrichtung über die Steuerventileinrichtung bis in die Steuerkolbeneinrichtung erstrecken können. Dadurch können die über die insbesondere endständige Schnittstelleneinrichtung eingehenden Signale bis zu den Steuerventilen und Steuerkolben zu deren Steuerung weitergeleitet werden, wobei die Steuerkolbeneinrichtung und die Steuerventileinrichtung nicht unmittelbar von außen erreichbar ausgebildet sein muss.

Vorzugsweise ist die zum Freigeben und Sperren der Düsenstränge erforderliche Elektronik zumindest teilweise, vorzugsweise vollständig in die Unterdruckerzeugungsvorrichtung integriert. Dadurch sind keine externen Steuergeräte und/oder Steuersignale erforderlich.

Dabei sind die Signalleitungen einerseits mit der Steuereinrichtung und andererseits mit der Ventilvorrichtung, insbesondere den Steuerventilen, sowie den Drucksensoren zum Messen des Unterdrucks im Saugvolumen und/oder Saugkanälen verbunden. Vorzugsweise sind dabei der erste Schwellwert und der zweite Schwellwert in der Steuereinrichtung, beispielsweise elektronisch und/oder digital, hinterlegt. Ein von einem Drucksensor gemessener Druckwert kann über die Signalleitungen in die Steuereinrichtung weitergeleitet werden, um dort mit dem ersten und/oder zweiten Schwellwert verglichen zu werden und daraus ein Steuersignal zu erzeugen. Anschließend kann das Steuersignal von der Steuereinrichtung zu den Düsensträngen, insbesondere dem ersten, zweiten und/oder dritten Düsenstrang, über die Signalleitungen gesendet werden.

Vorzugsweise sind sämtliche Schnittstellen zum Kontakt mit externen Einrichtungen, insbesondere der Druckluftanschluss und/oder Signalanschluss, an der Schnittstelleneinrichtung angeordnet.

Besonders bevorzugt weist die Schnittstelleneinrichtung eine Blende auf, welche nicht in ein externes Gehäuse für die Unterdruckerzeugungsvorrichtung einschiebbar und/oder auch im eingeschobenen Zustand zumindest einseitig offen zugänglich ist. Die Blende verschließt dabei das Gehäuse im eingeschobenen Zustand. Dadurch sind die anderen Teile der Unterdruckerzeugungsvorrichtung innerhalb des Gehäuses geschützt.

Vorzugsweise erstreckt sich insgesamt ein Druckluftströmungsweg, welcher den Düsenstrang und vorzugsweise den gemeinsamen Strömungsabschnitt sowie die Strömungszweige beinhaltet, ausgehend von dem Druckluftanschluss der Schnittstelleneinrichtung, über die Steuerventileinrichtung, die Steuerkolbeneinrichtung, die Düseneinrichtung bis in die Schalldämpfereinrichtung erstreckt. Vorzugsweise durchzieht eine entsprechende, den Druckluftströmungsweg begrenzende Kanalstruktur die Schnittstelleneinrichtung, die Steuereinrichtung, die Steuerkolbeneinrichtung und die Düseneinrichtung und mündet in die Schalldämpfereinrichtung.

Gemäß einer bevorzugten Ausführungsform der Erfindung ist vorgesehen, dass zumindest zwei Einrichtungen, ausgewählt aus der Schnittstelleneinrichtung, der Steuereinrichtung, der Steuerkolbeneinrichtung, der Düseneinrichtung und/oder der Schalldämpfereinrichtung, jeweils zumindest ein Befestigungselement, insbesondere ein Steckverbindungsglied, zur gegenseitigen Befestigung der zwei Einrichtungen aneinander aufweisen. Vorzugsweise sind die Steckverbindungsglieder aneinander anclipsbar ausgebildet. Dadurch können die Module insbesondere manuell einfach und schnell miteinander verbunden werden, wobei vorzugsweise keine Werkzeuge hierfür erforderlich sind.

Gemäß einer bevorzugten Ausführungsform der Erfindung ist vorgesehen, dass die Schnittstelleneinrichtung, die Steuereinrichtung, die Steuerkolbeneinrichtung, die Düseneinrichtung und/oder die Schalldämpfereinrichtung seriell und vorzugsweise in der genannten Reihenfolge miteinander verbunden sind. Dadurch ist ein konstruktiv einfacher Aufbau gegeben. Zudem kann eine derartige

Unterdruckerzeugungsvorrichtung leicht erweitert werden, indem - insbesondere bei modulartiger Ausbildung der Einrichtungen - zusätzliche Module, beispielsweise Düsen-Untermodule und/oder Schalldämpfer-Untermodule, seriell dazwischen oder dahinter angeschlossen werden, um die Funktionalität und/oder Intensität der Schalldämpfung beziehungsweise Unterdruckerzeugung zu erhöhen.

Vorzugsweise weist die Unterdruckerzeugungsvorrichtung zumindest eine fluchtende Außenfläche auf, welche sich über mehrere Einrichtungen, insbesondere Module, erstreckt und zumindest zwei, miteinander fluchtende Teilflächen aufweist, wobei die zwei Teilflächen ausgewählt sind aus einer Außenfläche der Schnittstelleneinrichtung, einer Außenfläche der Steuerventileinrichtung, einer Außenfläche der Steuerkolbeneinrichtung, einer Außenfläche der Düseneinrichtung und/oder einer Außenfläche der Schalldämpfereinrichtung. Vorzugsweise ist in jedem Verbindungsbereich, in welchem zwei benachbarten Einrichtungen miteinander verbunden, insbesondere aneinandergesteckt, sind, jeweils zumindest eine solche fluchtende Außenfläche vorgesehen. Besonders bevorzugt fluchten sämtliche Außenfläche von jeweils zwei benachbarten Modulen im Grenzbereich zu dem benachbarten Modul miteinander. Dadurch wird das Einschieben in das Gehäuse vereinfacht, Kanten auf der Außenseite werden vermieden und die Stabilität erhöht.

Die jeweils fluchtende Außenfläche ist dabei bevorzugt in einem maximalen Abstand zu einer Einschubrichtung, insbesondere einer Mittelachse der Unterdruckerzeugungsvorrichtung, angeordnet, sodass keine andere Außenfläche der jeweils zwei Einrichtungen - gegebenenfalls mit Ausnahme der Schnittstelleneinrichtung, insbesondere dessen Blende, und mit Ausnahme der Steckverbindungsglieder - einen größeren Abstand zur Einschubrichtung beziehungsweise Mittelachse aufweist.

Besonders bevorzugt ist die Schnittstelleneinrichtung insbesondere ausschließlich mit der Steuereinrichtung verbunden, wobei die Steuerventileinrichtung auf einer der Schnittstelleneinrichtung abgewandten Seite mit der Steuerkolbeneinrichtung verbunden ist, wobei die Steuerkolbeneinrichtung auf einer der Steuerventileinrichtung abgewandten Seite mit der Düseneinrichtung verbunden ist, wobei die Düseneinrichtung auf einer der Steuerkolbenseite abgewandten Seite mit der Schalldämpfereinrichtung verbunden ist.

Gemäß einer bevorzugten Ausführungsform der Erfindung ist vorgesehen, dass im Saugkanal zumindest eine Rückschlagvorrichtung, insbesondere ein Rückschlagventil oder eine Rückschlagklappe, angeordnet ist, um einen Rückstrom aus dem Düsenstrang, insbesondere einem abgesperrten Düsenstrang, durch die Kanalsaugöffnung nach außen, insbesondere in Richtung eines Saugkörpers mit einem Saugvolumen, zu vermeiden. Dadurch wird die Effizienz der Unterdruckerzeugungsvorrichtung erhöht und Energie- und Druckluftverluste sind vermieden.

Bevorzugt sind dabei jedem Düsenstrang mehrere Rückschlagvorrichtungen zugeordnet, wobei bei einem mehrstufig ausgebildetem Düsenstrang vorzugsweise jeder Stufe des Düsenstrangs zumindest eine Rückschlagvorrichtung zugeordnet und mit dieser strömungstechnisch verbunden ist.

Die Rückschlagvorrichtung ist dabei ausgebildet und eingerichtet, um bei Überschreiten eines Schwell-Differenzdrucks zwischen Innendruck, insbesondere im jeweiligen Düsenstrang, und Außendruck, insbesondere außerhalb der Unterdruckerzeugungsvorrichtung, die strömungstechnische Verbindung insbesondere in Richtung nach außen durch den Saugkanal zu sperren.

Gemäß einer weiteren bevorzugten Ausführungsform ist die Unterdruckerzeugungsvorrichtung als Einschubejektor für einen Flächensauggreifer ausgebildet, wobei die Unterdruckerzeugungsvorrichtung in ein Gehäuse des Flächensauggreifers eingeschoben werden kann, insbesondere derart, dass im eingeschobenen Zustand das vorzugsweise als Blende ausgebildetes, den Druckluftausgang aufweisendes Modul, insbesondere das Schnittstellenmodul, aus dem Gehäuse des Flächensauggreifer herausragt und/oder nicht vollständig von dem Gehäuse abgedeckt ist. Besonders bevorzugt sind dabei das Steuerventilmodul, das Steuerkolbenmodul, das Düsenmodul und/oder das Schalldämpfermodul dabei derart im eingeschobenen Zustand in dem Gehäuse angeordnet, dass diese Module nicht von außerhalb des Gehäuses zugänglich sind und insbesondere von dem Gehäuse und gegebenenfalls anderen Modulen und/oder Bauteilen der Unterdruckerzeugungsvorrichtung vollständig abgedeckt sind. Dadurch wird nach außen eine kompakte und robuste Einheit bereitgestellt.

Die Aufgabe der Erfindung wird insbesondere auch durch einen Flächensauggreifer mit einer Unterdruckerzeugungsvorrichtung gemäß einem der vorangehenden Ausführungsbeispiele gelöst, wobei der Flächensauggreifer ein Gehäuse aufweist, in welches die Unterdruckerzeugungsvorrichtung zumindest teilweise einschiebbar, insbesondere eingeschoben, ist und vorzugsweise wieder herausnehmbar ist. Dabei weist das Gehäuse an dessen Saugseite, welche vorzugsweise auf einer Unterseite vorgesehen ist, eine Mehrzahl von vorzugsweise äquidistant zueinander angeordneten Saugöffnungen auf. Ferner umgreift das Gehäuse die Unterdruckerzeugungsvorrichtung größtenteils, vorzugsweise vollständig mit Ausnahme der Strömungsauslässe der Schalldämpfereinrichtung, der Blende der Schnittstelleneinrichtung sowie der Kanalsaugöffnungen. Auf einer Saugseite, welche insbesondere auf einer Unterseite des Gehäuses angeordnet ist, auf welcher im eingeschobenen Zustand die Kanalsaugöffnungen angeordnet sind, sowie im Bereich der Strömungsauslässe sind daher entsprechende Aussparungen in dem Gehäuse vorgesehen. Die Unterdruckerzeugungsvorrichtung wird über eine Einschuböffnung des Gehäuses in das Gehäuse eingeschoben. Die Einschuböffnung wird im eingeschobenen Zustand vorzugsweise vollständig von der Schnittstelleneinrichtung, insbesondere dessen Blende, verdeckt. Dadurch ist die Unterdruckerzeugungsvorrichtung vor äußeren Einflüssen geschützt und kompakt handhabbar.

Der Flächensauggreifer weist ferner bevorzugt einen Adapter auf, welcher auf der Unterseite montiert ist und den an den Kanalsaugöffnungen erzeugten Unterdruck auf eine insbesondere größere Fläche und/oder eine insbesondere größere Anzahl an Saugöffnungen verteilt. Der Adapter weist vorzugsweise eine Mehrzahl von elastischen Saugkörpern auf, welche die Saugöffnungen aufweisen, wobei der Saugkörper ausgebildet und eingerichtet ist, um im Betrieb der Unterdruckerzeugungsvorrichtung mit dem zu greifenden Gegenstand im Kontakt zu sein und diesen insbesondere unmittelbar zu greifen.

Gemäß einer bevorzugten Ausführungsform der Erfindung ist vorgesehen, dass im eingeschobenen Zustand der Unterdruckerzeugungsvorrichtung die Schalldämpfereinrichtung vollständig in einem Innenraum des Gehäuses angeordnet sind. Dadurch werden störende Konturen auf einer Außenseite vermieden, wodurch insbesondere ein Hängenbleiben des Flächensauggreifer an externen Strukturen vermieden wird.

Vorzugsweise sind auch die Steuereinrichtung, die Steuerkolbeneinrichtung, die Steuerventilrichtung, die Düseneinrichtung und/oder die Schnittstelleneinrichtung vollständig im Inneren des Gehäuses angeordnet. Gemäß eines alternativen Ausführungsbeispiels ist die Schnittstelleneinrichtung nur teilweise im Inneren des Gehäuses angeordnet, wobei insbesondere eine Blende der Schnittstelleneinrichtung aus dem Gehäuse zumindest teilwesei herausragt.

Vorzugsweise ist eine Dimensionierung, also ein Größenmaß, insbesondere die Höhe oder Breite, des Schalldämpfers senkrecht zur Einschubrichtung nicht größer als die der restlichen Module und/oder nicht größer als die Erstreckung des Innenraums des Gehäuses.

Weitere Einzelheiten und vorteilhafte Ausgestaltungen der Erfindung sind der folgenden Beschreibung zu entnehmen, anhand derer die in den Figuren dargestellte Ausführungsform der Erfindung näher beschrieben und erläutert ist.

Es zeigen:
- Fig. 1: eine Schnittansicht einer ersten Ausführungsform einer Unterdruckerzeugungsvorrichtung in einer Ansicht von oben;
- Fig. 2: eine seitliche Schnittansicht der in Figur 1 dargestellten, ersten Ausführungsform der Unterdruckerzeugungsvorrichtung;
- Fig. 3: eine Darstellung der in Figur 1 dargestellten, ersten Ausführungsform einer Unterdruckerzeugungsvorrichtung in einer Ansicht von unten;
- Fig. 4: eine Darstellung einer zweiten Ausführungsform in einer Ansicht von unten;
- Fig. 5: eine perspektivische Ansicht auf eine Unterdruckerzeugungsvorrichtung gemäß einer dritten Ausführungsform;
- Fig. 6: eine gedrehte, perspektivische Ansicht auf eine Unterdruckerzeugungsvorrichtung gemäß der dritten Ausführungsform.

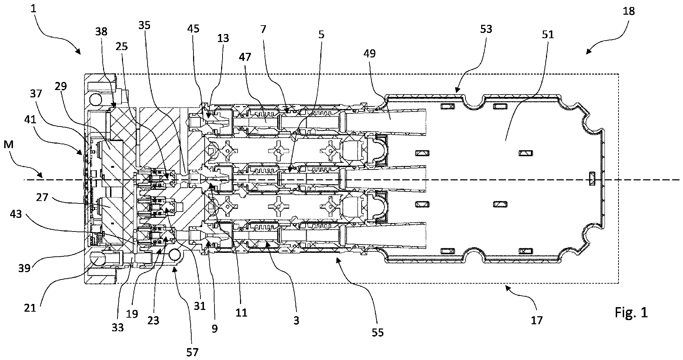

Fig. 1 zeigt eine Unterdruckerzeugungsvorrichtung 1 mit mehreren Düsensträngen, hier insbesondere einem ersten Düsenstrang 3, einem zweiten Düsenstrang 5 und einem dritten Düsenstrang 7. Die Düsenstränge weisen jeweils eine Ejektordüse auf, hier also insbesondere erste Ejektordüse 9 in dem ersten Düsenstrang 3, eine zweite Ejektordüse 11 in dem zweiten Düsenstrang 5 und eine dritte Ejektordüse 13 in dem dritten Düsenstrang 7.

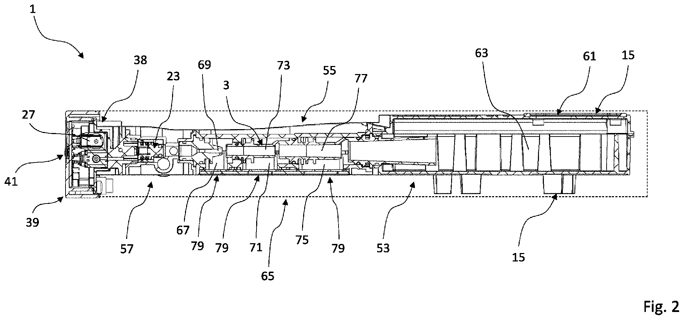

Die gesamte Unterdruckerzeugungsvorrichtung 1 ist hierbei ausgebildet und eingerichtet, um in ein externes Gehäuse 17, welches in Fig. 1 und Fig. 2 durch gestrichelte Linien angedeutet ist, eingeschoben zu werden.

Fig. 1 zeigt zudem einen Flächensauggreifer 18, welcher die Unterdruckerzeugungsvorrichtung 1 das Gehäuse 17 aufweist.

Vorzugsweise weist die Unterdruckerzeugungsvorrichtung 1 zumindest eine Führungsfläche 15 auf, welche in Fig. 2 erkennbar dargestellt ist. An der Führungsfläche 15 stützt sich die Unterdruckerzeugungsvorrichtung 1 beim Einschieben an einer Gehäuseinnenwand und/oder entsprechenden Führungsfläche des Gehäuses 17 ab.

Ferner ist in Fig. 1 eine Mittelachse M dargestellt, entlang welcher die Unterdruckerzeugungsvorrichtung 1 in das Gehäuse 17 eingeschoben wird, wodurch die Mittelachse M gleichzeitig die Einschubrichtung definiert.

Die Unterdruckerzeugungsvorrichtung 1 weist eine Ventilvorrichtung 19 auf, welche ausgebildet ist, um eine Strömungsverbindung zwischen den Ejektordüsen und einem Druckluftanschluss 21 einzeln freizugeben und/oder zu sperren. Die Ventilvorrichtung 19 weist in der hier darstellten Ausführungsform insbesondere Steuerventile und Steuerkolben auf, wobei die Steuerventile dazu ausgebildet sind, um die Steuerkolben zu betätigen. Die Steuerkolben ihrerseits sind dazu ausgebildet und eingerichtet, um die Strömungsverbindung zu sperren.

Dabei sind insbesondere zwei Steuerkolben vorgesehen, wobei ein erster Steuerkolben 23 ausgebildet und eingerichtet, um die Strömungsverbindung zu dem ersten Düsenstrang 3 freizugeben und zu sperren. Ein zweiter Steuerkolben 25 ist zudem ausgebildet und eingerichtet, um die Strömungsverbindung zu dem zweiten und dritten Düsenstrang 7 freizugeben und zu sperren.

Der erste Steuerkolben 23 ist dabei über ein erstes Steuerventil 27 betätigbar, wobei der zweite Steuerkolben 25 über ein zweites Steuerventil 29 betätigbar ist. Bei Betätigung der Steuerkolben wechseln diese zwischen einer Sperrstellung und einer Freigabestellung.

Darüber hinaus ist in Fig. 1 ein dritter Steuerkolben 31 erkennbar, welcher hier jedoch nicht dazu ausgebildet ist, um eine Strömungsverbindung zu einer der Düsenstränge zu freizugeben oder zu sperren. Stattdessen dient der dritte Steuerkolben 31 zusammen mit einem dritten Steuerventil einer Abblasfunktion.

Die über den Druckluftanschluss 21 zugeführt Druckluft wird zunächst durch einen gemeinsame Strömungsabschnitt 33 geführt und von dort auf die verschiedenen Strömungszweige aufgeteilt. Dabei besteht von dem gemeinsamen Strömungsabschnitt 33 über einen ersten Strömungszweig eine Strömungsverbindung zu dem ersten Düsenstrang 3. Die Strömungsverbindung zu dem zweiten Düsenstrang 5 und dem dritten Düsenstrang 7 wird über einen gemeinsamer Strömungszweigabschnitt 35 bereitgestellt, an welchen sich der zweite Düsenstrang 5 und der dritte Düsenstrang 7 anschließen.

Um die Strömungsverbindung zu dem zweiten Düsenstrang 5 und dritten Düsenstrang 7 mit dem zweiten Steuerkolben 25 freizugeben und zu sperren, ist der zweite Steuerkolben 25 ausgebildet und eingerichtet, um in den gemeinsamen Strömungszweigabschnitt 35 eindringen zu können, um dadurch die strömungstechnische Verbindung zum zweiten Düsenstrang 5 und dritten Düsenstrang 7 insbesondere gleichzeitig zu sperren oder freizugeben.

Zum Betätigen der Ventilvorrichtung 19, insbesondere der Steuerventile, ist ferner eine Steuereinrichtung 37 vorgesehen, welche hier insbesondere in Form einer Platine mit einer eingerichteten Steuerlogik vorliegt. Die Platine ist dabei steuerungstechnisch zum Übertragen von Schaltsignalen mit dem ersten Steuerventil 27, dem zweiten Steuerventil 29 und dem dritten Steuerventil verbunden.

Die Steuereinrichtung 37 ist vorzugsweise mit einer als Steuerventilmodul 38 ausgebildeten Steuerventileinrichtung verbunden. Dieses Steuerventilmodul 38 ist dabei als bauliche Einheit und insbesondere von den benachbarten Strukturen, insbesondere anderen Modulen, der Unterdruckerzeugungsvorrichtung 1 reversibel abtrennbar ausgebildet.

Optional kann zudem eine Schnittstelleneinrichtung 39 zumindest einen Signalanschluss 41 aufweisen, um die Steuereinrichtung 37 von extern, beispielsweise Diagnose- und Wartungszwecken und/oder um Steuerungssignale von extern einzuleiten, zu kontaktieren. Der Signalanschluss 41 ist dabei zur Signalübertragung mit der Steuereinrichtung 37 und/oder direkt mit den Steuerventilen insbesondere elektrisch verbunden.

Vorliegend sind die Steuerventile insbesondere eingerichtet, um die Steuerkolben pneumatisch zu betätigen. Dies erfolgt insbesondere indem bei einer Betätigung eines der Steuerventile diese in eine Freigabestellung gebracht werden, wobei ein Strömungsweg zwischen einer Steuerleitung 43, welche sich von dem gemeinsamen Strömungsabschnitt 33 abzweigt, und dem Steuerkolben freigegeben wird, wodurch der in dem gemeinsamen Strömungsabschnitt 33 herrschende Druck auf den Steuerkolben, insbesondere ein Betätigungsende des Steuerkolbens, einwirkt, wodurch sich dieser in seine Sperrstellung verlagert.

Durch eine weitere Betätigung eines der Steuerventile kann dann das Steuerventil in Sperrstellung gebracht werden, sodass die Steuerleitung strömungstechnisch von dem Steuerkolben abgetrennt wird. Zum Zurückstellen ist vorzugsweise ein Rückstellmechanismus vorgesehen, beispielsweise mittels einer Federrückstellung.

Alternativ kann der Steuerkolben als doppeltwirkender Steuerkolben ausgebildet sein, sodass je nach Stellung des Steuerventils der Steuerkolben entweder in die Sperrstellung oder in die Freigabestellung gedrängt wird.

Der Strömungsweg für Druckluft durch die Unterdruckerzeugungsvorrichtung 1 beginnt am Druckluftanschluss, durchläuft von dort den gemeinsamen Strömungsabschnitt 33, und teilt sich von dort in einen zu dem ersten Düsenstrang 3 führenden Strömungszweig sowie einen zu den beiden anderen Düsensträngen, hier dem zweiten Düsenstrang 5 und dem dritten Düsenstrang 7, führenden gemeinsamen Strömungszweigabschnitt auf. In den Düsensträngen werden die Ejektordüsen beginnend mit deren Treibdüsen 45 durchströmt. Anschließend durchströmt die eingeführte Druckluft weiter einen jeweiligen Mitteltrakt 47 und einen nachgeschalteten Diffusor 49 zu, welcher in einem Innenraum 51 einer als Modul ausgebildeten Schalldämpfereinrichtung 53 mündet. Dabei ist vorzugsweise jeder der Mitteltrakte 47 mehrstufig, hier insbesondere dreistufig ausgebildet, sodass in den einzelnen Düsenstränge jeweils mehrere Düsenstufen in Form von mehreren, insbesondere drei Ejektordüsen bereitgestellt sind.

Auch eine Düseneinrichtung 55, welche die Düsenstränge mit den Ejektordüsen aufweist, sowie eine Steuerkolbeneinrichtung 57, welche die Steuerkolben aufweist, sind als Modul ausgebildet.

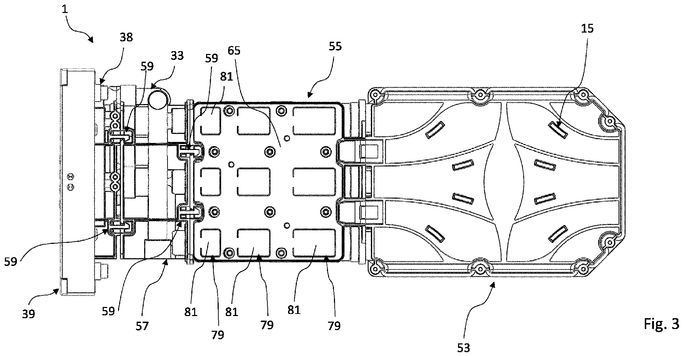

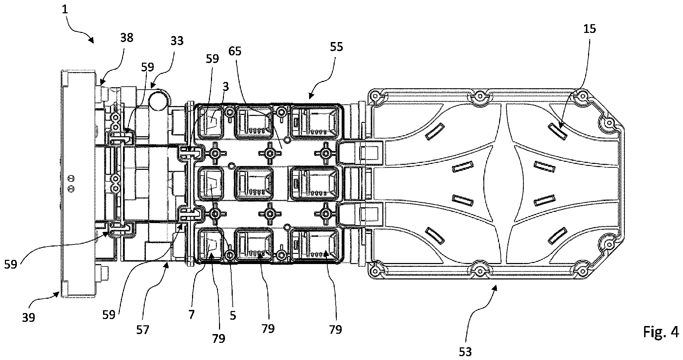

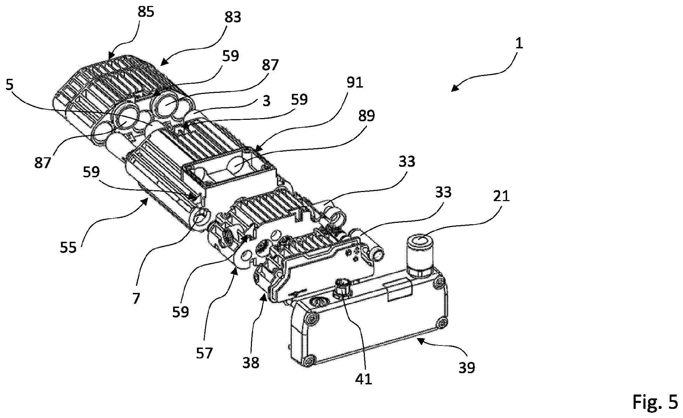

Da auch die Schnittstelleneinrichtung 39 insbesondere in Form einer Blende als Modul ausgebildet ist, besteht die Unterdruckerzeugungsvorrichtung 1 insgesamt aus mehreren, insbesondere fünf Modulen, nämlich dem Schnittstellenmodul, dem Steuerventilmodul 38, dem Steuerkolbenmodul 57, dem Düsenmodul und dem Schalldämpfermodul. Diese Module sind voneinander reversibel abtrennbar ausgebildet, wobei als Befestigungselemente zur Befestigung der Module aneinander jeweils Steckverbindungsglieder 59 vorgesehen sind. Einige dieser Steckverbindungsglieder 59 sind insbesondere in Fig. 3 und Fig. 4 anhand der ersten Ausführungsform sowie in Fig. 5 anhand der zweiten Ausführungsform der Unterdruckerzeugungsvorrichtung 1 dargestellt. Dabei weist jedes Modul für jedes benachbarte Modul zumindest ein Steckverbindungsglied 59 auf, um mit einem korrespondieren Steckverbindungsglied 59 des benachbarten Moduls ineinanderzugreifen, wenn die Module aneinander geclipst sind.

In Fig. 2 ist die Untererzeugungsvorrichtung 1 in einer seitlichen Ansicht dargestellt, wobei auch hier erkennbar ist, dass die Steuerkolben, hier insbesondere der erste Steuerkolben 23, mit Steuerventilen, hier insbesondere dem ersten Steuerventil 27, betätigbar sind. Die über die als Modul ausgebildete Schnittstelleneinrichtung 39 am Druckluftanschluss 21 eintretende Luft durchströmt das Steuerventilmodul 38, die als Modul ausgebildete Steuerkolbeneinrichtung 57, die als Modul ausgebildete Düseneinrichtung 55, in die als Modul ausgebildete Schalldämpfereinrichtung 53. Aus der Schalldämpfereinrichtung 53 kann die Luft über eine Strömungsöffnung 61 nach außen entweichen.

In der Schalldämpfereinrichtung 53 sind Schalldämpfungselemente 63 angeordnet, welche beispielsweise Schaumstoff aufweisen können.

Vorzugsweise ist zwischen der Schalldämpfereinrichtung 53 und der Düseneinrichtung 55 ein Erweiterungsmodul anordenbar, insbesondere angeordnet, welches eine zusätzliche Düsenstufe und/oder zusätzliche Schalldämpfungselemente aufweist. Dadurch kann die Unterdruckerzeugungsvorrichtung 1 flexibel erweitert und angepasst werden.

Ferner ist in Fig. 2 erkennbar, dass über mehrere Saugkanäle ein Fluid, insbesondere Luft, von einer als Saugseite ausgebildeten Unterseite 65 der Unterdruckerzeugungsvorrichtung 1 beziehungsweise des Flächensauggreifer 18 angesaugt werden kann. Dabei sind insbesondere drei Saugkanäle vorgesehen. Ein erster Saugkanal 67 führt dabei von der Unterseite 65 zu einem ersten Abschnitt 69 des Mitteltrakts 47, welcher vorzugsweise als erste Ejektordüse ausgebildet ist, einen kleinen Strömungsquerschnitt aufweist und eine erste Düsenstufe bildet. Ein zweiter Saugkanal 71 führt zu einem zweiten, mittleren Abschnitt 73 des Mitteltrakts 47, welcher vorzugsweise als zweite Ejektordüse ausgebildet ist, einen mittleren Strömungsquerschnitt aufweist und eine zweite Düsenstufe bildet. Ein dritter Saugkanal 75 führt zu einem dritten Abschnitt 77 des Mitteltrakts 47, welcher vorzugsweise als dritte Ejektordüse ausgebildet ist, einen großen Strömungsquerschnitt aufweist und eine dritte Düsenstufe bildet. Dadurch ist die Unterdruckerzeugung sehr effektiv und es kann ein hoher Unterdruck erzeugt werden.

Der erste Saugkanal 67, der zweite Saugkanal 71 und der dritte Saugkanal 75 erstrecken sich dabei von jeweiligen Kanalsaugöffnungen 79 bis zu den Düsensträngen, wovon in Fig. 2 der erste Düsenstrang 3 dargestellt ist.

In Fig. 3, in welcher die Unterdruckerzeugungsvorrichtung 1 von unten zu sehen ist, sodass die Unterseite 65 dem Betrachter zugewandt ist, sind ferner Rückschlagklappen 81 erkennbar, mit welchen die Kanalsaugöffnungen 79 verschließbar sind, sodass Luft im Wesentlichen nur außen in die Saugkanäle einströmen kann und ein Luftstrom von innerhalb der Unterdruckerzeugungsvorrichtung 1 nach außen von den Rückschlagklappen 81 blockiert wird.

Auch sind in Fig. 3 und Fig. 4 nochmal die Führungsflächen 15, an welchen die Unterdruckerzeugungsvorrichtung 1 beim Einschieben in das Gehäuse 17 geführt wird, besonders gut von unten erkennbar.

Wie ebenfalls aus Fig. 2, Fig. 3 und Fig. 4 ersichtlich ist, sind jedem der Düsenstränge 3, 5, 7 nicht nur jeweils drei Saugkanäle, sondern auch entsprechend jeweils drei Kanalsaugöffnungen 79 und jeweils drei Rückschlagklappen 81 zugeordnet, wodurch ein Rückstrom aus der Unterdruckerzeugungsvorrichtung 1 nach außen erschwert wird.

Das Gehäuse 17, in welches die Unterdruckerzeugungsvorrichtung 1 einschiebbar ist, weist in den Bereichen, an denen im eingeschobenen Zustand die Kanalsaugöffnungen 79 und die Strömungsöffnung 61 der Schalldämpfereinrichtung 53 positioniert sind, strömungsdurchlässige Bereiche, insbesondere Aussparungen, auf.

Anders als in Fig. 3 sind in Fig. 4 die Rückschlagklappen 81 nicht dargestellt, sodass der Blick von unten in die Saugkanäle frei ist.

Außerdem ist in Fig. 3 und Fig. 4 erkennbar, dass der gemeinsame Strömungsabschnitt 33 außen an dem Steuerventilmodul 38 entlang bis zu der Steuerkolbeneinrichtung 39 geführt wird. Dadurch wird in Zusammenschau mit Fig. 1 klar, dass der erste Düsenstrang in Fig. 3 und in Fig. 4 oben, der zweiten Düsenstrang 5 in der Mitte und der dritte Düsenstrang 7 unten angeordnet ist.

Figur 5 zeigt eine Unterdruckerzeugungsvorrichtung 1 gemäß einer zweiten Ausführungsform, wobei die einzelnen Module jeweils voneinander getrennt sind. Das bedeutet, dass die Module nicht aneinander montiert sind und die Steckverbindungsglieder 59 in dem hier dargestellten Zustand jeweils nicht ineinandergreifen. Dadurch können einzelne Module einfach ausgetauscht und gewartet werden.

Auch hier ist über einen Druckluftanschluss 21 Druckluft zuführbar, welche anschließend eine Steuerventileinrichtung 38 entlang eines gemeinsamen Strömungsabschnitts 33 durchströmt und dadurch einer Steuerkolbeneinrichtung 57 zugeführt wird. Sofern die in der Steuerkolbeneinrichtung 57 angeordneten Steuerkolben in Ihrer Freigabestellung sind, strömt die Druckluft weiter in die Düsenstränge, hier den ersten Düsenstrang 3, den zweiten Düsenstrang 5 und den dritten Düsenstrang 7, wobei auch hier vorzugsweise der zweite Düsenstrang 5 und dritte Düsenstrang 7 mittels desselben Steuerkolbens abgesperrt und freigegeben werden können.

Strömungstechnisch hinter der Düseneinrichtung 55 mit den insbesondere drei Düsensträngen schließt sich hier ein Erweiterungsmodul 83 an, welches eine zusätzliche Düsenstufe und/oder zusätzliche Schalldämpfungselemente aufweist.

Das Erweiterungsmodul 83 kann mehrere Untermodule aufweisen, wobei in einem Endabschnitt 85 die Luft in einen oberen Strömungsweg mit hier insbesondere zwei oberen Strömungssträngen 87 umgeleitet wird, sodass sie in entgegengesetzter Richtung zur Strömungsrichtung in den Düsensträngen, also in Richtung der Düseneinrichtung, zurückströmt und in zwei weitere, obere Strömungsstränge 89 der Düseneinrichtung 55 eintritt.

Nach dem Durchströmen des Erweiterungsmoduls wird die Luft über die zwei weiteren, oberen Strömungsstränge 89 einer Schnittstellenstruktur 91 zugeführt, an welche vorzugsweise die Schalldämpfereinrichtung 53 angeschlossen werden kann, um die Geräuschentwicklung der Unterdruckerzeugungsvorrichtung 1 zu reduzieren.

In der hier dargestellten zweiten Ausführungsform der Unterdruckerzeugungsvorrichtung 1 ist insbesondere vorgesehen, dass die Schalldämpfereinrichtung 53 außerhalb des Gehäuses 17, in welches die Unterdruckerzeugungsvorrichtung 1 einschiebbar ist, angeordnet, vorzugsweise indem die Schalldämpfereinrichtung 53 von außen an dem Gehäuse 17 montiert ist.

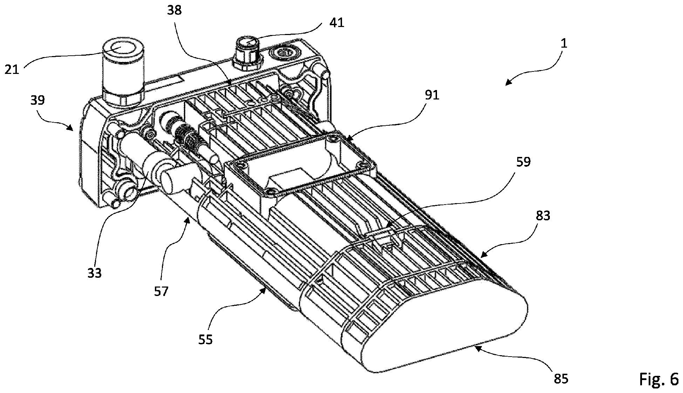

Fig. 6 zeigt die in Fig. 5 dargestellte, zweite Ausführungsform der Unterdruckerzeugungsvorrichtung 1, wobei die einzelnen Module hier aneinander befestigt sind.

## Patentansprüche

1. Druckluftbetriebene Unterdruckerzeugungsvorrichtung (1), insbesondere zum Einschieben in ein Gehäuse (17) eines Flächensauggreifers (18), umfassend
- eine Mehrzahl von Düsensträngen (3, 5, 7) mit jeweils zumindest einer Ejektordüse (9, 11, 13) zur Erzeugung von Unterdruck aus Druckluft,
- wenigstens einen Druckluftanschluss (21) zum Anschluss an eine Druckluftversorgung,
- eine Ventilvorrichtung (19), welche dazu ausgebildet ist, eine jeweilige Strömungsverbindung zwischen den Düsensträngen (3, 5, 7) und dem wenigstens einen Druckluftanschluss (21) einzeln freizugeben und/oder abzusperren.

2. Unterdruckerzeugungsvorrichtung (1) nach Anspruch 1, wobei die Ventilvorrichtung (19) ausgebildet und eingerichtet ist, um einen ersten Düsenstrang (3) mit einem ersten Schließelement zu sperren und freizugeben, und um einen zweiten Düsenstrang (5) und einen dritten Düsenstrang (7) gemeinsam mit einem zweiten Schließelement zu sperren und freizugeben.

3. Unterdruckerzeugungsvorrichtung (1) nach einem der vorhergehenden Ansprüche, wobei die Ventilvorrichtung (1) zum Freigeben und Sperren der Strömungsverbindung zumindest einen Steuerkolben (23, 25) aufweist, welcher vorzugsweise in einer insbesondere separat ausgebildeten Steuerkolbeneinrichtung (57) angeordnet ist, und welcher ausgebildet und eingerichtet ist, um zumindest einen der Düsenstränge (3, 5, 7) strömungstechnisch zu blockieren und die Strömungsverbindung zur Ejektordüse (9, 11, 13) dieses Düsenstrangs (3, 5, 7) zu unterbrechen oder zumindest abzuschwächen.

4. Unterdruckerzeugungsvorrichtung (1) nach einem der vorhergehenden Ansprüche, wobei die Unterdruckerzeugungsvorrichtung (1) zum Freigeben und Sperren der Strömungsverbindungen eine Steuereinrichtung (37) aufweist, welche ausgebildet und eingerichtet ist, um die Ventilvorrichtung (19) pneumatisch und/oder elektrisch zu betätigen.

5. Unterdruckerzeugungsvorrichtung (1) nach Anspruch 4, wobei eine Steuerventileinrichtung (38) vorgesehen ist, welche zum Verstellen des Steuerkolbens (23, 25) ausgebildet und eingerichtet ist und vorzugsweise zumindest ein elektrisch und/oder pneumatisch betätigbares Steuerventil (27, 29) aufweist.

6. Unterdruckerzeugungsvorrichtung nach einem der vorhergehenden Ansprüche, wobei die Unterdruckerzeugungsvorrichtung (1) einen Saugkanal (67, 71, 75) aufweist, der eine Kanalsaugöffnung (79) mit zumindest einem der Düsenstränge (3, 5, 7) strömungstechnisch verbindet.

7. Unterdruckerzeugungsvorrichtung (1) nach Anspruch 6, wobei die der Saugkanal (67, 71, 75) und die Düsenstränge (3, 5, 7) in einer insbesondere als Düsenmodul mit einem eigenen Düsenmodulgehäuse ausgebildeten Düseneinrichtung (55) angeordnet sind.

8. Unterdruckerzeugungsvorrichtung (1) nach Anspruch 6, wobei im Saugkanal (67, 71, 75) zumindest eine Rückschlagvorrichtung, insbesondere ein Rückschlagventil oder eine Rückschlagklappe (81), angeordnet ist, um einen Rückstrom aus dem Düsenstrang (3, 5, 7), insbesondere einem abgesperrten Düsenstrang (3, 5, 7), durch die Kanalsaugöffnung (79) zu vermeiden.

9. Unterdruckerzeugungsvorrichtung (1) nach einem der vorhergehenden Ansprüche, wobei die Unterdruckerzeugungsvorrichtung (1) eine Schalldämpfereinrichtung (53) aufweist, wobei die Düsenstränge (3, 5, 7) in die Schalldämpfereinrichtung (53) münden.

10. Unterdruckerzeugungsvorrichtung (1) nach einem der vorhergehenden Ansprüche, wobei die Unterdruckerzeugungsvorrichtung (1) eine insbesondere als Frontblende ausgebildete Schnittstelleneinrichtung (39) aufweist, wobei der Druckluftanschluss (21) und vorzugsweise zumindest ein Signalanschluss (41) an der Schnittstelleneinrichtung (39) angeordnet ist.

11. Unterdruckerzeugungsvorrichtung (1) nach einem der Ansprüche 4, 7, 8 und 9, wobei zumindest zwei Einrichtungen ausgewählt aus der Schnittstelleneinrichtung (39), der Steuerventileinrichtung (38), der Steuereinrichtung (37), der Steuerkolbeneinrichtung (57), der Düseneinrichtung (55) und/oder der Schalldämpfereinrichtung (53), jeweils vorzugsweise als Modul mit einem eigenen Modulgehäuse ausgebildet sind, und jeweils zumindest ein Befestigungselement, insbesondere ein Steckverbindungsglied (59), zur gegenseitigen Befestigung der zwei Einrichtungen aneinander aufweisen.

12. Unterdruckerzeugungsvorrichtung (1) nach einem der Ansprüche 4, 7, 8 und 9, wobei die Schnittstelleneinrichtung (39), die Steuereinrichtung (37), die Steuerventileinrichtung (38) die Steuerkolbeneinrichtung (57), die Düseneinrichtung (55) und/oder die Schalldämpfereinrichtung (53) seriell und vorzugsweise in der genannten Reihenfolge miteinander verbunden sind.

13. Flächensauggreifer (18) mit der
Unterdruckerzeugungsvorrichtung (1) nach einem der vorhergehenden Ansprüche und mit einem Gehäuse (17), in welches die Unterdruckerzeugungsvorrichtung (1) zumindest teilweise eingeschoben ist, wobei das Gehäuse (17) an einer Saugseite eine Mehrzahl von Saugöffnungen aufweist.

14. Flächensauggreifer (18) nach Anspruch 13, wobei im eingeschobenen Zustand der Unterdruckerzeugungsvorrichtung (1) die Schalldämpfereinrichtung (53) vollständig in einem Innenraum des Gehäuses (17) angeordnet sind.
